# EUROPÄISCHE PATENTANMELDUNG

(11) **EP 0 736 356 A1**
(43) Veröffentlichungstag der Anmeldung: **09.10.1996**
(21) Anmeldenummer: 96105151.3
(22) Anmeldetag: 30.03.1996
(51) Int. Cl.: B23K 20/10, B41F 19/06

(54) **Verfahren und Vorrichtung zum Verbinden einer Siegelfolie mit einer Materialbahn**

(30) Priorität: 30.03.1995 DE 19511698
(71) Anmelder: SCHOBER GmbH Werkzeug- und Maschinenbau, D-71735 Eberdingen (DE)
(72) Erfinder: Wittmaier, Klaus, 71665 Vaihingen/Enz (DE)
(74) Vertreter: Dreiss, Fuhlendorf & Steimle Patentanwälte

(57) **Zusammenfassung**

Bei einem Verfahren und einer Vorrichtung zum Verbinden einer Siegelfolie (2) mit einer Materialbahn (1) wird die Siegelfolie an die Materialbahn herangeführt und die Materialbahn zusammen mit der Siegelfolie entlang der Oberfläche eines Stützkörpers (4) bewegt. Die Siegelfolie wird mit der Materialbahn dadurch einfach verbunden, daß die Materialbahn mit der Siegelfolie zwischen einer Ultraschalleinheit und der Oberfläche des Stützkörpers hindurchgeführt wird und daß zum Verbinden der Siegelfolie mit der Materialbahn mittels der Ultraschalleinheit Ultraschallenergie in die Materialbahn und/oder die Siegelfolie eingeleitet wird.

## Beschreibung

Die Erfindung betrifft ein Verfahren zum Verbinden einer Siegelfolie mit einer Materialbahn, bei dem die Siegelfolie an die Materialbahn herangeführt wird und die Materialbahn zusammen mit der Siegelfolie entlang der Oberfläche eines Stützkörpers bewegt werden. Die Erfindung betrifft außerdem eine Vorrichtung zum Verbinden einer Siegelfolie mit einer Materialbahn, mit einem Stützkörper, auf dessen Oberfläche die Materialbahn zusammen mit der Siegelfolie aufliegt.

Mit der DE 32 10 551 C2 sind ein Verfahren und eine Vorrichtung zum Anbringen eines Prägefolien-Abdruckes auf einer flexiblen Materialbahn bekannt geworden. Bei dieser Vorrichtung werden die Materialbahn zusammen mit der Prägefolie um einen beheizten Siegelzylinder herumgeführt und werden mittels verschwenkbarer Andruckrollen an die Oberfläche des Siegelzylinders angepreßt. Auf diese Weise wird ein großer Umschlingungswinkel erreicht und die Materialbahn wird zusammen mit der Prägefolie an einer Vielzahl von Stellen auf die Oberfläche des als Stützkörper dienenden beheizten Siegelzylinders aufgepreßt.

Als nachteilig hat sich bei dieser Vorrichtung herausgestellt, daß für die Andruckrollen ein relativ kompliziertes Gerüstsystem erforderlich ist, so daß die Rollen zum Einfädeln einer neuen Materialbahn von der Oberfläche des beheizten Siegelzylinders abgehoben werden müssen und anschließend, d.h. nach dem Einführen der Materialbahn, wieder an die Oberfläche des Siegelzylinders herangeführt werden müssen. Außerdem müssen die Rollen mit gleichem und konstantem Druck beaufschlagt werden. Als nachteilig wird außerdem angesehen, daß aufgrund des beheizten Siegelzylinders die gesamte Materialbahn erhitzt wird und durch den großen Umschlingungswinkel am beheizten Siegelzylinder die Materialbahn schrumpft und zwar in Längs- als auch in Querrichtung. Außerdem können keine oder nur sehr begrenzte thermosensitive Materialien mit einer derartigen Einrichtung bearbeitet werden. Nach dem Durchlaufen der Siegelstrecke über den Siegelzylinder ist es unbedingt notwendig, daß die Materialbahn gekühlt wird, was einen hohen konstruktiven als auch finanziellen Aufwand bedeutet. Außerdem ist es erforderlich, daß die Materialbahn flexibel ist, so daß sie um die beheizte Walze über einen relativ großen Umschlingungswinkel herumgeführt werden kann. Das Herumführen um die beheizte Walze über einen großen Umschlingungswinkel hat außerdem den Nachteil, daß es bei Mehrschichtmaterial zu Verspannungen innerhalb der einzelnen Schichten kommen kann bzw. daß die Prägefolie nach dem Aufsiegeln auf die gekrümmte Materialbahn beim Ausrichten der Materialbahn verspannt wird, was Beschädigungen der Prägefolie zur Folge haben kann.

Der Erfindung liegt daher die Aufgabe zu Grunde, ein Verfahren und eine Vorrichtung der eingangs genannten Art so weiterzubilden, daß mit relativ einfachen Mitteln eine Siegelfolie mit einer Materialbahn verbunden werden kann.

Diese Aufgabe wird mit dem eingangs genannten Verfahren erfindungsgemäß dadurch gelöst, daß die Materialbahn mit der Siegelfolie zwischen einer Ultraschalleinheit und der Oberfläche des Stützkörpers hindurchgeführt wird und daß zum Verbinden der Siegelfolie mit der Materialbahn mittels der Ultraschalleinheit Ultraschallenergie in die Materialbahn und/oder Siegelfolie eingeleitet wird.

Das erfindungsgemäße Verfahren hat den wesentlichen Vorteil, daß der Energieeintrag zum Verbinden der Siegelfolie mit der Materialbahn nicht über den Stützkörper erfolgt und dieser daher eine beliebige Temperatur aufweisen kann. Der Energieeintrag mittels der Ultraschalleinheit kann wesentlich gezielter abgegeben werden und zeitliche und örtliche Änderungen im Energieeintrag, zum Beispiel pulsierender Energieeintrag o.dgl., ist ohne weiteres möglich. Ein weiterer Vorteil wird in der Einsparung von Betriebskosten gesehen, da keine Walzen beheizt werden müssen und keine Kühleinrichtungen erforderlich sind. Außerdem wird die Materialbahn thermisch schonend behandelt und dadurch Verspannungen vermieden.

Bei einem bevorzugten Ausführungsbeispiel wird die Oberfläche des Stützkörpers mit der Materialbahn mitbewegt. Dies hat den Vorteil, daß der Stützkörper als Vorschubantrieb für die Materialbahn und die Siegelfolie dienen kann, so daß zwischen der Materialbahn und dem Stützkörper keine Reibungskräfte, die eventuell die Materialbahn beschädigen könnten, entstehen.

Bei anderen Ausführungsformen wird die Materialbahn relativ zur Oberfläche des Stützkörpers bewegt. Diese Ausführungsform hat den wesentlichen Vorteil, daß sie keine bewegte Teile aufweist und daher relativ einfach aufgebaut ist und daher auch als preiswertes Nachrüstbauteil einsetzbar ist.

Bei einer weiteren Ausführunsform ist vorgesehen, daß die Materialbahn während des Verbindens mit der Siegelfolie auf einer geraden oder gekrümmten Bahn bewegt wird. Die Bewegung der Materialbahn entlang einer geraden Fläche hat den Vorteil, daß Mehrschichtmaterial bearbeitet werden kann, ohne daß Verspannungen oder Beschädigungen einzelner Schichten zu befürchten sind. Es können auch Materialbahnen bearbeitet werden die relativ unflexibel sind und daher nicht über eine Walze geführt werden können. Die Bewegung der Materialbahn zusammen mit der Siegelfolie entlang einer gekrümmten Bahn hat den Vorteil, daß durch entsprechende Spannrollen die Siegelfolie optimal, d.h. bereits unter Vorspannung auf die Materialbahn aufgelegt werden kann und die Ultraschalleinheit lediglich zum Energieeintrag verwendet werden muß und nicht zum Anpressen der Siegelfolie auf die Materialbahn.

Die o.g. Aufgabe wird bei der eingangs genannten Vorrichtung erfindungsgemäß dadurch gelöst, daß eine Ultraschalleinheit vorgesehen ist und daß die Ultraschalleinheit und die Oberfläche des Stützkörpers einen Siegelspalt für die Materialbahn mit der Siegelfolie bilden.

Bei dieser erfindungsgemäßen Vorrichtung wird also die Materialbahn zusammen mit der Siegelfolie durch einen Siegelspalt geführt, der in Durchlaufrichtung relativ kurz sein kann, da der Energieeintrag über die Ultraschalleinheit und nicht über den Stützkörper erfolgt. Die Höhe des Energieeintrags kann dabei zum Beispiel von der Durchlaufgeschwindigkeit der Materialbahn abhängig sein. Durch gezielte Ansteuerung der Ultraschalleinheit kann der Energieeintrag gezielt verändert werden, z.B. proportional zur Durchlaufgeschwindigkeit der Materialbahn. Da der Energieeintrag nicht über Wärmeleitung erfolgt, reagiert die Ultraschalleinheit auf eine Veränderung in der Ansteuerung der Ultraschalleinheit unmittelbar, d.h. ohne trägheitsbedingte Verzögerungen.

Bei einer Weiterbildung ist vorgesehen, daß die Sonotrodenspitze der Ultraschalleinheit an die Oberflächenform des Stützkörpers angepaßt ist. Bei einem ebenen Stützkörper ist die Sonotrodenspitze ebenfalls eben und eventuell mit einem Auslauf und einem Einlauf ausgebildet. Bei gekrümmter Oberflächenform des Stützkörpers, wenn dieser zum Beispiel eine Walze ist, dann ist die Sonotrodenspitze entsprechend konkav ausgestaltet, so daß sie flächig auf der Materialbahn bzw. Siegelfolie aufliegt.

Bei besonderen Ausführungsformen kann der Stützkörper, insbesondere eine Walze, beheizbar sein. Diese Wärmezufuhr über den Stützkörper kann den Siegelvorgang positiv beeinflussen. Bei anderen Ausführungsformen kann dieser Stützkörper jedoch auch gekühlt sein, so daß die durch den Energieeintrag der Ultraschalleinheit entstehende Wärme nach dem Siegelvorgang sofort an den Stützkörper abgeführt wird. Ein Kühlabschnitt kann dem Siegelabschnitt jedoch auch nachgeschaltet sein.

Bei einer bevorzugten Ausführungsform der Erfindung ist die in Laufrichtung der Materialbahn orthogonale Abmessung der Sonotrodenspitze der Ultraschalleinheit gleich oder geringfügig größer ausgebildet als die entsprechende Abmessung der Siegelfolie. Es wird also lediglich im Bereich der Siegelfolie Energie von der Ultraschalleinheit abgegeben was den Vorteil hat, daß auch thermosensitive Materialbahnen verwendet werden können, da die außerhalb der Siegelfolie liegenden Bereiche der Materialbahn nicht beeinflußt werden.

Bei einer weiteren Vorrichtung ist vorgesehen, daß die Ultraschalleinheit mit einer Vorrichtung zur Konstanthaltung der Höhe des Siegelspalts verbunden ist. Eventuelle temperaturbedingte Längenänderungen der Sonotrode werden über diese Vorrichtung ausgeglichen.

Durch die erfindungsgemäße Vorrichtung können die Rüstzeiten und Einstellzeiten auf ein Minimum reduziert werden, so daß auch relativ kleine Chargen kostengünstig bearbeitbar sind.

Bei einer Weiterbildung ist vorgesehen, daß der Stützkörper, auf welchem die Materialbahn aufliegt, eine ultraschallabsorbierende Oberfläche besitzt. Aufgrund dieser ultraschallabsorbierenden Oberfläche wird verhindert, daß der mittels der Sonotrode in die Materialbahn und über die Materialbahn in die Oberfläche des Stützkörpers eingeleitete Ultraschallschwingung in den Kern des Stützkörpers weitergeleitet wird. Auf diese Weise wird verhindert, daß der Stützkörper durch den Ultraschall beschädigt wird. Inbesondere bei sehr dünnen Materialbahnen hat sich diese Ausführungsform des Stützkörpers bewährt, da in diesem Falle nicht die gesamte, von der Sonotrode abgegebene Energie von der Materialbahn aufgenommen wird bzw. aufgenommen werden kann. In diesem Falle nimmt die Oberfläche des Stützkörpers die Ultraschallenergie auf und schützt dadurch den Kern des Stützkörpers.

Bei einer Weiterbildung ist vorgesehen, daß die Oberfläche von einem separaten Element, z.B. einer Hülse, gebildet wird, die insbesondere über ein elastisches Element, z.B. Kunststoff, Gummi o.dgl., mit dem Kern des Stützkörpers verbunden ist. Aufgrund der Zwischenschaltung des elastischen Elements zwischen der Oberfläche und dem Kern des Stützkörpers können die Ultraschallschwingungen nicht weitergeleitet werden sondern werden insbesondere in diesem elastischen Element absorbiert. Bevorzugt ist das separate Element nur abschnittsweise mit dem Kern des Stützkörpers verbunden. Insbesondere liegt es nicht vollflächig auf dem Kern auf, sondern wird nur punktuell oder linienförmig oder nur in bestimmten Bereichen abgestützt. Somit kann die Weiterleitung der eingebrachten Ultraschallenergie lediglich in diesen Abschnittsbereichen erfolgen, wohingegen in den nicht abgestützten Bereichen der Kern des Stützkörpers geschont wird.

Gemäß einem bevorzugten Ausführungsbeispiel sind zwischen der ultraschallabsorbierenden Oberfläche und dem Kern des Stützkörpers ein oder mehrere Hohlräume vorgesehen, dabei kann der Kern des Stützkörpers z.B. mit Rippen oder im Falle einer umlaufenden Walze mit einem Außengewinde versehen sein. Auf dieses Außengewinde kann als Stützfläche für die Materialbahn eine Hülse aufgezogen sein.

Weitere Vorteile, Merkmale und Einzelheiten der Erfindung ergeben sich aus der nachfolgenden Beschreibung, in der unter Bezugnahme auf die Zeichnung besonders bevorzugte Ausführungsbeispiele im einzelnen dargestellt sind. Dabei können die in der Zeichnung dargestellten und in den Ansprüchen und in der Beschreibung erwähnten Merkmale jeweils einzeln für sich oder in beliebiger Ausführungsform erfindungswesentlich sein. Die Zeichnung zeigen:
- Figur 1: einen schematischen Aufbau einer bevorzugten Ausführungsform der erfindungsgemäßen Vorrichtung in Seitenansicht;
- Figur 2: einen Längsschnitt durch eine erste Ausführungsform des erfindungsgemäßen Stützkörpers mit einem zwischen der Oberfläche und dem Kern des Stützkörpers sich befindendem elastischen Element;
- Figur 3: einen abgebrochenen Längsschnitt durch eine zweite Ausführungsform des Stützkörpers mit umlaufenden Rippen;
- Figur 4: einen abgebrochenen Längsschnitt durch eine dritte Ausführungsform des Stützkörpers mit unterhalb der Oberfläche eingearbeiteten Hohlräumen; und
- Figur 5: eine vierte Ausführungsform des erfindungsgemäßen Stützkörpers mit einer auf den Kern des Stützkörpers aufgezogenen Hülse.

Bei der in der Zeichnung dargestellten Ausführungsform einer bevorzugten Siegelvorrichtung werden eine Materialbahn 1 und eine Siegelfolie 2 zusammengeführt und über eine drehbar gelagerte Walze 3 gelenkt. Der Umschlingungswinkel α ist relativ gering und liegt etwa bei 60°. Umschlingungswinkel von weniger als 60°, zum Beispiel 10° sind problemlos möglich. Anstelle einer Walze 3 kann auch eine ebene Fläche als Stützkörper 4 für die Materialbahn 1 und die Siegelfolie 2 dienen.

Beim dargestellten Ausführungsbeispiel dreht sich die Walze 3 in Richtung des Pfeils 5 um. Oberhalb des umschlungenen Bereichs der Walze 3 befindet sich eine Sonotrode 6 einer nicht dargestellten Ultraschalleinheit. Die Spitze 7 der Sonotrode 6 schwingt in Richtung des Doppelpfeils 8. Zwischen der Sonotrodenspitze 7 und der Walze 3 befindet sich ein Siegelspalt 9 der eine bestimmte Höhe aufweist und durch den die Materialbahn 1 mit der Siegelfolie 2 geführt wird. Beim dargestellten Ausführungsbeispiel liegt die Sonotrodenspitze 7 auf der Siegelfolie 2 auf. Es ist jedoch auch denkbar, daß die Sonotrodenspitze 7 auf der Materialbahn 1 aufliegt, d.h. daß die Siegelfolie 2 sich zwischen der Materialbahn 1 und der Walze 3 befindet. Die Sonotrodenspitze 7 weist eine konkave Form auf, die im wesentlichen dem Krümmungsradius der Walze 3 entspricht. Die zur Zeichenebene orthogonale Abmessung der Sonotrode 6 bzw. deren Spitze 7 entspricht im wesentlichen der entsprechenden Breite der Siegelfolie 2. Auf diese Weise wird der Energieeintrag durch die Sonotrodenspitze 7 auf den Bereich der Siegelfolie 2 beschränkt. Eine thermosensitive Beschichtung der Materialbahn 1 würde durch die Sonotrode 6 nicht beschädigt bzw. aktiviert werden. Die Walze 3 kann beheizt oder unbeheizt sein. Im Anschluß an die Walze 3 kann eine nicht dargestellte Kühleinrichtung vorgesehen sein.

Die Figur 2 zeigt einen Längsschnitt durch ein erstes Ausführungsbeispiel eines als umlaufende Walze 3 ausgebildeten Stützkörpers 4, der aus einem Kern 10, einem hülsenförmigen, den Kern 10 umgebenden elastischen Element 11 sowie einer das Element umgebenden Oberfläche 12 besteht. Diese Oberfläche 12 wird bei diesem Ausführungsbeispiel der Figur 2 von einer Hülse 13 gebildet. Wirken auf diese Hülse 13 Ultraschallschwingungen ein, werden diese vom elastischen Element 11, welches aus Gummi, Kunststoff o.dgl. besteht, absorbiert und nicht auf den Kern 10 übertragen.

In der Figur 3 ist ein weiteres Ausführungsbeispiel eines Stützkörpers 4 dargestellt, bei dem der Kern 10 in Umfangsrichtung verlaufende Rippen 14 aufweist. Auf der Umfangsfläche dieser Rippen 14 stützt sich eine Hülse 13 ab, die somit nur über einen Teil ihrer Innenumfangsfläche auf dem Kern 10 aufliegt. Auf diese Weise wird ebenfalls eine elastische Aufnahme der Hülse 13 erzielt.

Beim Ausführungsbeispiel der Figur 4 ist der Kern 10 einstückig mit einer Hülse 13 ausgebildet, wobei diese Hülse 13 über einen radial verlaufenden Steg 15 mit dem Kern 10 verbunden ist. Zwischen der Hülse 13 und dem Kern 10 befinden sich Hohlräume 16, die eine Weiterleitung der Ultraschallschwingungen, die in die Hülse 13 eingeleitet werden, verhindern.

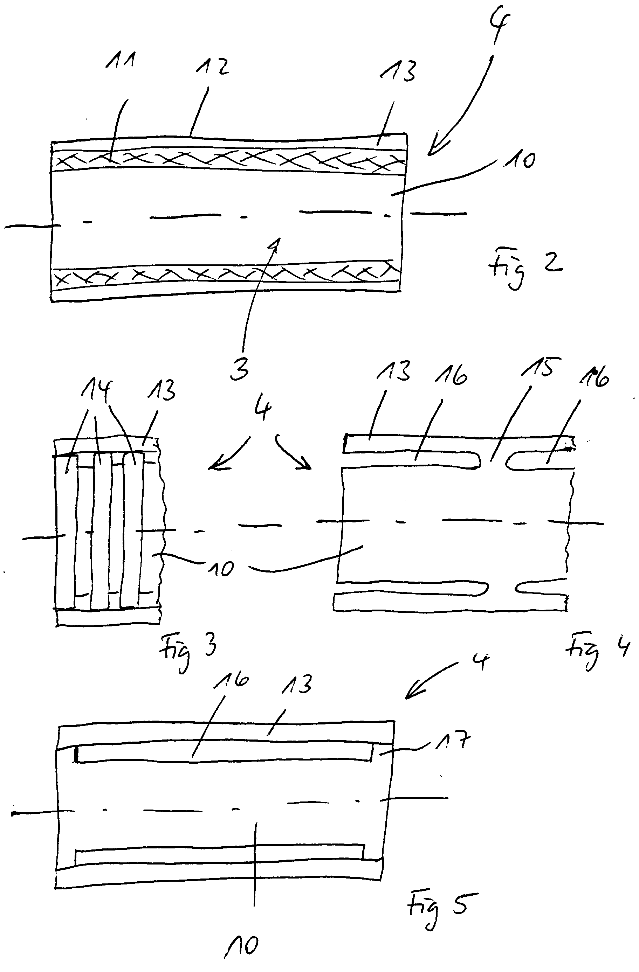

Beim Ausführungsbeispiel der Figur 5 ist die Hülse 13 lediglich im Bereich ihrer freien Enden an den Kern 10 überragenden Vorsprüngen 17 abgestützt, so daß sie in ihrem mittleren Bereich einen Abstand zum Kern 10 aufweist. Dieser Hohlraum 16 verhindert ebenfalls eine Weiterleitung der Ultraschallschwingungen und insbesondere werden diese 4 und somit im Bereich des Hohlraums 16 in die Hülse 13 eingeleitet.

Der in der Zeichnung dargestellte Aufbau ist rein schematisch wiedergegeben, wobei die Vorrichtung als Anbaueinheit oder Nachrüstsatz ausgebildet sein kann.

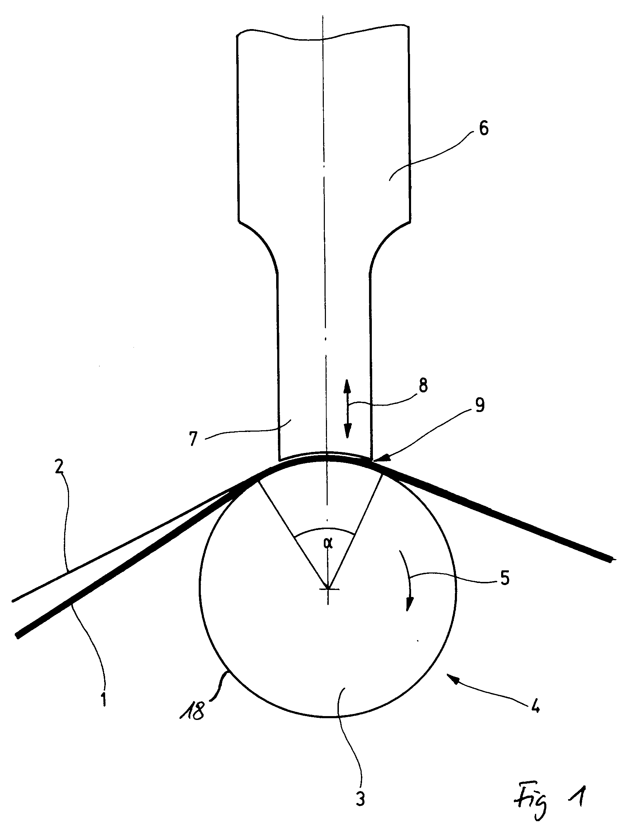

Der Stützkörper 4 kann, wie in Figur 1 dargestellt, mit einer aufgespannten Zwischenschicht 18 versehen sein, die ultraschallabsorbierend ist. Der Stützkörper 4 kann aber auch ohne diese Zwischenschicht 18 verwendet werden. Bei einem anderen Ausführungsbeispiel kann die Zwischenschicht 18 mit der Materialbahn 1 mitgeführt werden.

## Patentansprüche

1. Verfahren zum Verbinden einer Siegelfolie (2) mit einer Materialbahn (1), bei dem die Siegelfolie (2) an die Materialbahn (1) herangeführt wird und die Materialbahn (1) zusammen mit der Siegelfolie (2) entlang der Oberfläche eines Stützkörpers (4) bewegt werden, **dadurch gekennzeichnet,** daß die Materialbahn (1) mit der Siegelfolie (2) zwischen einer Ultraschalleinheit und der Oberfläche des Stützkörpers (4) hindurchgeführt wird und daß zum Verbinden der Siegelfolie (2) mit der Materialbahn (1) mittels der Ultraschalleinheit Ultraschallenergie in die Materialbahn (1) und/oder die Siegelfolie (2) eingeleitet wird.

2. Verfahren nach Anspruch 1, dadurch gekennzeichnet, daß die Oberfläche des Stützkörpers (4) mit der Materialbahn (1) mitbewegt wird oder daß die Materialbahn (1) relativ zur Oberfläche des Stützkörpers (4) bewegt wird.

3. Verfahren nach einem der vorhergehenden Ansprüche, dadurch gekennzeichnet, daß die Materialbahn (1) während des Verbindens mit der Siegelfolie (2) auf einer geraden oder gekrümmten Bahn bewegt wird.

4. Vorrichtung zum Verbinden einer Siegelfolie (2) mit einer Materialbahn (1), insbesondere nach einem der vorhergehenden Ansprüche, mit einem Stützkörper (4) auf dessen Oberfläche die Materialbahn (1) zusammen mit der Siegelfolie (2) aufliegt, dadurch gekennzeichnet, daß eine Ultraschalleinheit vorgesehen ist und daß die Ultraschalleinheit und die Oberfläche des Stützkörpers (4) einen Siegelspalt (9) für die Materialbahn (1) mit der Siegelfolie (2) bilden.

5. Vorrichtung nach Anspruch 4, dadurch gekennzeichnet, daß der Stützkörper (4) eine ebene oder gekrümmte Fläche ist, insbesondere eine umlaufende Walze (3) ist.

6. Vorrichtung nach einem der Ansprüche 4 oder 5, dadurch gekennzeichnet, daß die Form der Sonotrodenspitze (7) der Ultraschalleinheit an die Form der Oberfläche des Stützkörpers (4) angepaßt ist.

7. Vorrichtung nach einem der Ansprüche 4 bis 6, dadurch gekennzeichnet, daß der Stützkörper (4) beheizbar ist.

8. Vorrichtung nach einem der Ansprüche 4 bis 7, dadurch gekennzeichnet, daß dem Siegelabschnitt ein Kühlabschnitt nachgeschaltet ist.

9. Vorrichtung nach einem der Ansprüche 4 bis 8, dadurch gekennzeichnet, daß die in Laufrichtung der Materialbahn (1) orthogonale Abmessung der Sonotrodenspitze (7) der Ultraschalleinheit gleich oder geringfügig größer ist als die entsprechende Abmessung der Siegelfolie (2).

10. Vorrichtung nach einem der Ansprüche 4 bis 9, dadurch gekennzeichnet, daß die Ultraschalleinheit mit einer Vorrichtung zur Konstanthaltung der Höhe des Siegelspalts (9) verbunden ist.

11. Vorrichtung nach einem der Ansprüche 4 bis 10, dadurch gekennzeichnet, daß der Stützkörper (4) eine ultraschallabsorbierende Oberfläche (12) besitzt.

12. Vorrichtung nach Anspruch 11, dadurch gekennzeichnet, daß die Oberfläche (12) von einem separaten Element, z.B. einer Hülse (13), gebildet wird, die über ein elastisches Element (11), welches z.B. aus Kunststoff, Gummi o.dgl. besteht, mit dem Kern (10) des Stützkörpers (4) verbunden ist.

13. Vorrichtung nach Anspruch 11 oder 12, dadurch gekennzeichnet, daß das separate Element nur abschnittsweise mit dem Kern (10) des Stützkörpers (4) verbunden ist.

14. Vorrichtung nach einem der Ansprüche 11 bis 13, dadurch gekennzeichnet, daß zwischen der ultraschallabsorbierenden Oberfläche (12) und dem Kern (10) des Stützkörpers (4) ein oder mehrere Hohlräume (16) vorgesehen sind.

15. Vorrichtung nach einem der Ansprüche 11 bis 14, dadurch gekennzeichnet, daß der Kern (10) des Stützkörpers (4) ein Außengewinde oder Rippen (14) aufweist.

16. Vorrichtung nach einem der Ansprüche 4 bis 15, dadurch gekennzeichnet, daß zwischen der Materialbahn (1) und dem Stützkörper (4) eine ultraschallabsorbierende Zwischenschicht (18) vorgesehen ist, die insbesondere als Endlosband mitläuft oder auf den Stützkörper (4) aufgebracht ist.
